# EUROPEAN PATENT APPLICATION

(11) **EP 4 772 786 A1**
(43) Date of publication of application: **08.07.2026**
(21) Application number: 24858331.2
(22) Date of filing: 15.08.2024
(51) Int. Cl.: F16M 11/04, F16M 11/16, H01R 13/502, H01R 13/639

(54) **ACCESSORY BODY AND ACCESSORY**

(30) Priority: 30.08.2023 CN 202311112027
(71) Applicant: Beijing Zitiao Network Technology Co., Ltd., Beijing 100190 (CN)
(72) Inventor: FENG, Zhao, Beijing 100028 (CN); WEN, Yuluo, Beijing 100028 (CN)
(74) Representative: Isarpatent
(86) International application number: PCT/CN2024/112450
(87) International publication number: WO 2025/044788

(57) **Abstract**

The present disclosure relates to the technical field of electronic devices, and relates to an accessory body and an accessory. The accessory body is provided with a first plug-in connector and a first snap-fit connector, the accessory body is used for being connected with an accessory base, the accessory base includes a base body, a second plug-in connector, and a snap-fit structure, the second plug-in connector is rotatably disposed on the base body and can be in plug-in connection with the first plug-in connector, and the snap-fit structure and the first snap-fit connector can be in snap fit or released from the snap fit; and when the first plug-in connector and the second plug-in connector are in plug-in connection, after the accessory body is pressed, the second plug-in connector is driven to rotate so as to snap fit the first snap-fit connector and the snap-fit structure.

## Description

### CROSS-REFERENCE TO RELATED APPLICATION(S)

The present disclosure claims priority to Chinese Patent Application No. 202311112027.5, filed with the China National Intellectual Property Administration on Aug 30, 2023, which is incorporated herein by reference in its entirety.

### FIELD

The present disclosure relates to the technical field of electronic devices, and particularly relates to an accessory body and an accessory.

### BACKGROUND

The virtual reality technology is becoming increasingly mature, and application scenarios of wearable devices have continuously expanded to a wider range, such as movies, games, and social networking.

### SUMMARY

The present disclosure provides an accessory body and an accessory.

In a first aspect, the present disclosure provides an accessory body. The accessory body is provided with a first plug-in connector and a first snap-fit connector, the accessory body is used for being connected with an accessory base, the accessory base includes a base body, a second plug-in connector, and a snap-fit structure, the second plug-in connector is rotatably disposed on the base body and is capable of being in plug-in connection with the first plug-in connector, and the snap-fit structure and the first snap-fit connector are capable of being in snap fit or released from the snap fit; and
in a case that the first plug-in connector and the second plug-in connector are in plug-in connection, after the accessory body is pressed, the second plug-in connector is driven to rotate so as to snap fit the first snap-fit connector and the snap-fit structure.

Optionally, heights of the first plug-in connector and the first snap-fit connector are both less than half of a height of the accessory body in a height direction of the accessory body.

Optionally, the accessory body is provided with a light-emitting portion.

In a second aspect, the present disclosure further provides an accessory. The accessory includes an accessory base and the accessory body provided in the first aspect.

Optionally, a light-emitting portion is disposed on the accessory body and/or the accessory base.

Optionally, both the first plug-in connector and the second plug-in connector are electrical connectors, and the electrical connectors are configured to achieve signal transmission and/or electrical transmission between the accessory body and the accessory base; or
both the accessory base and the accessory body are provided with connectors, and in a case that the first snap-fit connector and the snap-fit structure are in snap fit, the two connectors are connected to achieve signal transmission and/or electrical transmission between the accessory base and the accessory body.

Optionally, both the first plug-in connector and the second plug-in connector are electrical connectors, and the light-emitting portion achieves electrical transmission through the electrical connectors; or
both the accessory base and the accessory body are provided with connectors, and the light-emitting portion achieves electrical transmission through the connectors.

Optionally, the snap-fit structure includes a second snap-fit connector and a drive component, the second snap-fit connector is slidably disposed on the base body, the second snap-fit connector has a snap-fit position capable of snap fit with the first snap-fit connector and an unlocking position capable of releasing the snap fit from the first snap-fit connector, and the drive component is capable of driving the first snap-fit connector to be switched between the snap-fit position and the unlocking position.

Optionally, the drive component includes a first elastic element, one end of the first elastic element is connected to the base body, the other end is connected to the second snap-fit connector, and in a natural state, the second snap-fit connector is located at the snap-fit position.

Optionally, a guiding cambered surface is disposed on the first snap-fit connector and/or the second snap-fit connector; and
in a case that the accessory body is pressed, the accessory body is capable of passing over the second snap-fit connector through the guiding cambered surface and being in snap fit with the second snap-fit connector.

Optionally, the drive component further includes a driving element, the driving element has a first inclined surface, and the second snap-fit connector has a second inclined surface attached to the first inclined surface; and

in a case that the driving element moves downwards along the second inclined surface, the second snap-fit connector is capable of being driven to move from the snap-fit position to the unlocking position and compressing the first elastic element.

Optionally, the base body is provided with an installation cavity, the first elastic element is located inside the installation cavity, one end, having the first inclined surface, of the driving element is located inside the installation cavity, the other end is located outside the installation cavity, and the second inclined surface on the second snap-fit connector is located inside the installation cavity.

Optionally, the base body is provided with an accommodation cavity capable of accommodating the accessory body, a portion of the second plug-in connector is located inside the accommodation cavity, and in a case that the second snap-fit connector is located at the snap-fit position, a portion of the second snap-fit connector is located inside the accommodation cavity.

Optionally, a depth of the accommodation cavity is less than or equal to a height of the accessory body;
and/or, the base body includes an outer shell and an inner shell connected to each other, the inner shell is provided with the accommodation cavity, and the inner shell is provided with a first penetration hole for the second plug-in connector to penetrate through and a second penetration hole for the second snap-fit connector to penetrate through.

Optionally, the accessory base further includes a second elastic element. The second elastic element deforms and provides a lifting force for the second plug-in connector to rotate so as to lift the accessory body in a direction away from the accessory base.

Optionally, the second plug-in connector is provided with a limiting portion, the base body is provided with a limiting surface, and the limiting surface is configured to limit the limiting portion in a case that the second plug-in connector lifts the accessory body.

Optionally, the accessory body is a wearable device.

### BRIEF DESCRIPTION OF THE DRAWINGS

The accompanying drawings herein are incorporated into the specification to form a part of the specification, illustrate embodiments conforming to the present disclosure, and are used to explain the principle of the present disclosure together with the specification.

In order to describe the technical solutions in the embodiments of the present disclosure or in the prior art more clearly, the accompanying drawings required to be used in descriptions of the embodiments or the prior art will be briefly introduced below, and it is apparent that those of ordinary skill in the art may also obtain other accompanying drawings according to these accompanying drawings without creative work.
FIG. 1 is a structural schematic diagram of a wearable device according to an embodiment of the present disclosure;
FIG. 2 is a schematic diagram of disassembly of a wearable device according to an embodiment of the present disclosure;
FIG. 3 is a first cross-sectional schematic diagram of a wearable device according to an embodiment of the present disclosure;
FIG. 4 is a second cross-sectional schematic diagram of a wearable device according to an embodiment of the present disclosure;
FIG. 5 is a first schematic diagram of a local structure of a wearable device according to an embodiment of the present disclosure; and
FIG. 6 is a second schematic diagram of a local structure of a wearable device according to an embodiment of the present disclosure.

Where,
1-accessory body; 11-body structure; 111-first plug-in connector; 12-light-transmitting cover; 121-first snap-fit connector;
2-accessory base; 21-base body; 201-installation cavity; 211-outer shell; 2111-limiting surface; 212-inner shell; 2121-accommodation cavity; 22-second plug-in connector; 221-limiting portion; 23-snap-fit structure; 231-second snap-fit connector; 232-first elastic element; 233-driving element; 24-second elastic element; and 25-connector.

### DETAILED DESCRIPTION OF EMBODIMENTS

To have a more clear understanding of the above objectives, features, and advantages of the present disclosure, the solution of the present disclosure is further described below. It should be noted that features of the embodiments and implementations in the present disclosure can be mutually combined without conflicts.

Many specific details are elaborated in the following description to facilitate a full understanding of the present disclosure, but the present disclosure may also be implemented in methods different from those described here. Obviously, the embodiments in the specification are only a part rather all of the embodiments of the present disclosure.

Currently, mainstream body trackers on the market are based on body (legs, a waist, and arms) tracking and identification functions. A main body and a base of the body tracker are non-removable or difficult to remove, and the main body is difficult to use separately as a peripheral, limiting the application scenarios. Compared with the prior art, the technical solutions provided by the embodiments of the present disclosure have the following advantages: the first plug-in connector and the first snap-fit connector are disposed on the accessory body, the accessory body is used for being connected with the accessory base, and the accessory base includes the second plug-in connector rotatably disposed on the base body, and the snap-fit structure that may snap fit with or may release the snap fit from the first snap-fit connector. When the first plug-in connector and the second plug-in connector are in plug-in connection, after the accessory body is pressed, the second plug-in connector is driven to rotate so as to snap fit the first snap-fit connector and the snap-fit structure, such that the accessory body and the accessory base are integrally connected to be used through plug-in and snap-fit connections. In addition, by releasing the snap fit between the first snap-fit connector and the snap-fit structure, and releasing the plug-in connection between the first plug-in connector and the second plug-in connector, the accessory body and the accessory base are disassembled, thereby separately using the accessory body, and expanding application scenarios.

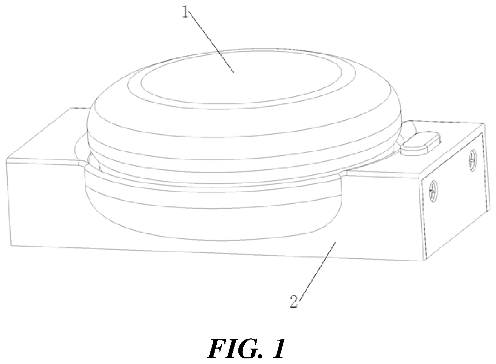

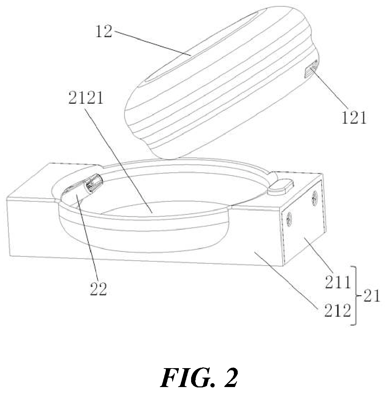

As shown in FIG. 1 and FIG. 2, the present disclosure provides an accessory body 1. The accessory body 1 is provided with a first plug-in connector 111 and a first snap-fit connector 121. The accessory body 1 is used for being connected with an accessory base 2. The accessory base 2 includes a base body 21, a second plug-in connector 22, and a snap-fit structure 23. The second plug-in connector 22 is rotatably disposed on the base body 21 and may be in plug-in connection with the first plug-in connector 111. The snap-fit structure 23 and the first snap-fit connector 121 may be in snap fit or released from the snap fit. When the first plug-in connector 111 and the second plug-in connector 22 are in plug-in connection, after the accessory body 1 is pressed, the second plug-in connector 22 is driven to rotate so as to snap fit the first snap-fit connector 121 and the snap-fit structure 23.

It should be understood that the first plug-in connector 111 and the first snap-fit connector 121 are disposed on the accessory body 1, and the accessory base 2 includes the second plug-in connector 22 disposed rotatably on the base body 21, and the snap-fit structure 23 that may snap fit with or may release the snap fit from the first snap-fit connector 121. When the first plug-in connector 111 and the second plug-in connector 22 are in plug-in connection, after the accessory body 1 is pressed, the second plug-in connector 22 is driven to rotate so as to snap fit the first snap-fit connector 121 and the snap-fit structure 23, such that the accessory body 1 and the accessory base 2 are integrally connected to be used through plug-in and snap-fit connections. In addition, by releasing the snap fit between the first snap-fit connector 121 and the snap-fit structure 23, and releasing the plug-in connection between the first plug-in connector 111 and the second plug-in connector 22, the accessory body 1 and the accessory base 2 are disassembled, thereby separately using the accessory body 1, and expanding application scenarios.

In some embodiments, the accessory body 1 is provided with a light-emitting portion. The light-emitting portion has an effect of enabling the accessory body 1 to be tracked. The light-emitting portion may emit visible or invisible light, forming a light spot or a pattern. After collecting the light spot or the pattern formed by the light-emitting portion, a camera may recognize a relative position and/or a pose of the accessory body 1 based on relevant algorithms, thereby tracking the accessory body 1.

Further, the accessory body 1 includes a body structure 11 and a light-transmitting cover 12. The body structure 11 is provided with the light-emitting portion, and the light-transmitting cover 12 wraps the body structure 11 to protect the light-emitting portion while not affecting emission of light from the light-emitting portion.

Specifically, in a specific implementation, the light-emitting portion is an infrared lamp, and the light-transmitting cover 12 allows infrared rays to pass through. Alternatively, the light emitted by the light-emitting portion may also be visible light or invisible light other than the infrared rays, such as near-infrared light. In this case, the light-transmitting cover 12 is correspondingly set according to characteristics of the light emitted by the light-emitting portion.

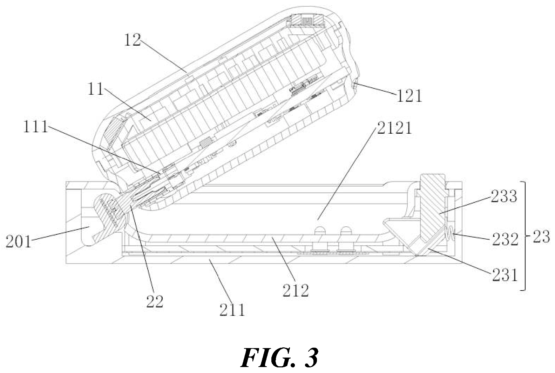

As shown in FIG. 3, in some embodiments, heights of the first plug-in connector 111 and the first snap-fit connector 121 are both less than half a height of the accessory body 1 in a height direction of the accessory body 1.

In other words, both the first plug-in connector 111 and the first snap-fit connector 121 are located below half the height of the accessory body 1, thereby facilitating the exposure of an upper half part of the accessory body 1 when the accessory body 1 and the accessory base 2 are connected, and making it convenient to grip the upper half part of the accessory body 1 for plugging or unplugging, and also saving installation materials for the accessory base 2. The accessory body 1 is provided with the light-emitting portion, which better facilitates the exposure of the light-emitting portion, so as to track the light-emitting portion on the accessory body 1.

It should be noted that the first plug-in connector 111 and the second plug-in connector 22 may be distinguished to be male and female plug-in connectors capable of achieving simultaneous electrical connection, such as a USB and Type-C. Taking the Type-C as an example, the second plug-in connector 22 may be a Type-C male connector, and the first plug-in connector 111 may be a Type-C female socket. Alternatively, there may be connectors that are not distinguished between male and female but are capable of achieving electrical connection, such as Anderson plugs. Alternatively, there may also be plug-in connectors only having a structural plug-in function. For example, one of the first plug-in connector 111 and the second plug-in connector 22 is a plug-in post, and the other one is a plug-in hole. In this case, when the first plug-in connector 111 and the second plug-in connector 22 are in plug-in connection, only structural plug-in connection is achieved without the function of electrical connection.

It should be noted that one of the first snap-fit connector 121 and the snap-fit structure 23 is a snap-fit protrusion, and the other one is a snap-fit hole. When the accessory body 1 is pressed, the snap-fit protrusion may deform so as to be inserted into the snap-fit hole. Alternatively, both the first snap-fit connector 121 and the snap-fit structure 23 may also be snap-fit protrusions, and at least one of the two snap-fit protrusions may elastically deform to achieve snap fit or release from the snap fit.

An embodiment of the present disclosure further provides an accessory, including the above accessory body 1 and the accessory base 2.

Exemplarily, in a specific implementation, the above accessory is a wearable device. The wearable device is preferably but not limited to a body tracker. The accessory body 1 and the accessory base 2 may be used in combination to be strapped onto a position, such as the leg, the waist, and the arm of a user. The accessory body 1 may also be separately used as a gaming peripheral applied to devices such as a baseball bat and a table tennis racket.

In some embodiments, a light-emitting portion is disposed on the accessory body 1 and/or the accessory base 2. For example, only the accessory body 1 is provided with the light-emitting portion; or, only the accessory body 2 is provided with the light-emitting portion; or, both the accessory body 1 and the accessory base 2 are provided with the light-emitting portions. By arranging the light-emitting portion, the accessory may be tracked through the accessory body 1 and/or the accessory base 2.

In some embodiments, both the first plug-in connector 111 and the second plug-in connector 22 are electrical connectors. The electrical connectors are used to achieve signal transmission and/or electrical transmission between the accessory body 1 and the accessory base 2.

Exemplarily, in a specific implementation, referring to FIG. 2 and FIG. 3, the second plug-in connector 22 may be the Type-C male connector, and the first plug-in connector 111 may be the Type-C female socket. After the first plug-in connector 111 and the second plug-in connector 22 are in plug-in connection, the plug-in connection of the accessory body 1 and the accessory base 2 is achieved, and meanwhile electrical transmission and signal transmission between the accessory body 1 and the accessory base 2 are achieved. Alternatively, the first plug-in connector 111 may be the Type-C male connector, and the second plug-in connector 22 may be the Type-C female socket.

Exemplarily, in a specific implementation, when both the first plug-in connector 111 and the second plug-in connector 22 are electrical connectors, the light-emitting portion achieves electrical transmission through the electrical connectors. Therefore, additional line arrangements can be omitted, and the structure of the accessory body 1 and the accessory base 2 is simplified.

Optionally, in some other embodiments, both the accessory base 2 and the accessory body 1 are provided with connectors 25. When the first snap-fit connector 121 and the snap-fit structure 23 are in snap fit, the two connectors 25 are connected to achieve signal transmission and/or electrical transmission between the accessory base 2 and the accessory body 1.

It should be understood that in this case, the light-emitting portion may achieve electrical transmission through the connectors 25, so as to be powered. The cooperation between the first plug-in connector 111 and the second plug-in connector 22 may only achieve plug-in connection of the accessory body 1 and the accessory base 2 without the function of electrical transmission and signal transmission or the function of electrical transmission and/or signal transmission. Alternatively, the light-emitting portion may achieve electrical transmission through the first plug-in connector 111 and the second plug-in connector 22, so as to be powered, and the connectors 25 do not have the function of electrical transmission and signal transmission or the function of electrical transmission and/or signal transmission. When both the cooperation between the first plug-in connector 111 and the second plug-in connector 22, as well as the connectors 25 are available, electrical transmission and/or signal transmission between the accessory body 1 and the accessory base 2 are/is more flexible, and a connection method with optimal electrical characteristics may be selected.

It should be noted that each connector 25 may be of a wired transmission structure or a wireless transmission structure capable of achieving signal transmission, where the wired transmission structure may be, for example, pogopin, and the wireless transmission structure may be, for example, near field communication (NFC), radio frequency identification device (RFID), and Bluetooth. Alternatively, each connector 25 may also be of a structure capable of achieving electrical transmission, such as wired electrical connection or wireless charging.

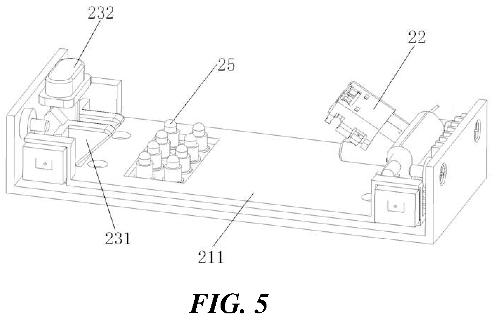

Exemplarily, in a specific implementation, referring to FIG. 5, the base body 21 is provided with a connector 25, and in this case, the accessory body 1 is also correspondingly provided with a connector 25. The connector 25 is located on a bottom surface of the accessory body 1, namely, a surface of the accessory body 1 that makes contact with the base body 21 when the first snap-fit connector 121 is in snap fit with the snap-fit structure 23. The connector 25 on the accessory base 2 is disposed in correspondence with a position of the connector 25 on the accessory body 1. Therefore, after the accessory body 1 and the accessory base 2 are assembled in place, the two connectors 25 are connected to facilitate operations. The accessory body 1 and the accessory base 2 may shield the two connectors 25 to a certain degree so as to protect the connectors 25.

As shown in FIG. 3 to FIG. 6, the snap-fit structure 23 includes a second snap-fit connector 231 and a drive component. The second snap-fit connector 231 is slidably disposed on the base body 21. The second snap-fit connector 231 has a snap-fit position for snap fit with the first snap-fit connector 121 and an unlocking position for releasing the snap fit from the first snap-fit connector 121. The drive component may drive the first snap-fit connector 121 to be switched between the snap-fit position and the unlocking position.

It should be understood that snap fit or snap fit releasing between the second snap-fit connector 231 and the first snap-fit connector 121 can be achieved through cooperation of the drive component and the second snap-fit connector 231, thereby disassembling the accessory body 1 from the accessory base 2 for separate use.

In some embodiments, the drive component includes a first elastic element 232. One end of the first elastic element 232 is connected to the base body 21, and the other end is connected to the second snap-fit connector 231. In a natural state, the second snap-fit connector 231 is located at the snap-fit position.

It should be understood that in the natural state, the second snap-fit connector 231 is located at the snap-fit position, in other words, when the accessory body 1 and the accessory base 2 are connected into a whole, the second snap-fit connector 231 and the first snap-fit connector 121 are in a snap-fit state, and by arranging the first elastic element 232, acting force may be applied to the second snap-fit connector 231, such that the first snap-fit connector 121 and the second snap-fit connector 231 are in stable snap fit.

Further, by arranging a guiding cambered surface on the first snap-fit connector 121 or the second snap-fit connector 231, when the accessory body 1 is pressed, the accessory body 1 may pass over the second snap-fit connector 231 through the guiding cambered surface and is in snap fit with the second snap-fit connector 231.

In other words, by arranging the guiding cambered surface, the accessory body 1 may slide along the guiding cambered surface when being pressed, thereby reducing friction force and facilitating the accessory to pass over the second snap-fit connector 231. In the sliding process of the accessory body 1 along the guiding cambered surface, the second snap-fit connector 231 compresses the first elastic element 232, such that after the accessory body 1 passes over the guiding cambered surface, restorable acting force of the first elastic element 232 pushes the second snap-fit connector 231 to abut against the first snap-fit connector 121, thereby achieving snap fit between the first snap-fit connector 121 and the second snap-fit connector 231. Therefore, after the accessory body 1 and the accessory base 2 are in plug-in connection through the first plug-in connector 111 and the second plug-in connector 22, the snap-fit connection between the accessory body 1 and the accessory base 2 can be achieved only by pressing the accessory body 1 to move the first elastic element 232, without any additional operations.

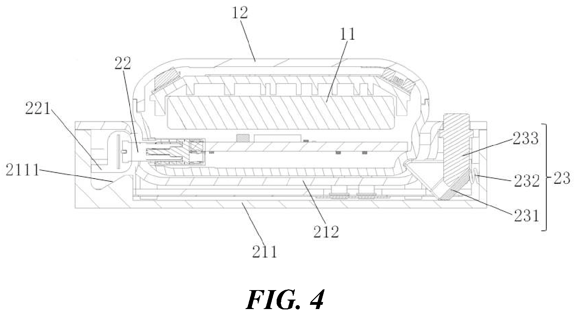

Exemplarily, in a specific implementation, referring to FIG. 3 and FIG. 4, the second snap-fit connector 231 is provided with the guiding cambered surface, and when the accessory body 1 is pressed, the accessory body 1 slides along the guiding cambered surface of the second snap-fit connector 231, and pushes the second snap-fit connector 231 to compress the first elastic element 232.

Exemplarily, in a specific implementation, referring to FIG. 5, the first snap-fit connector 121 is a clamping hole. When the first snap-fit connector 121 and the second snap-fit connector 231 are in snap fit, the second snap-fit connector 231 extends into the clamping hole. Alternatively, the first snap-fit connector 121 may also be a protrusion disposed on the accessory body 1.

Further, the drive component also includes a driving element 233, which has a first inclined surface. The second snap-fit connector 231 has a second inclined surface attached to the first inclined surface. When the driving element 233 moves downwards along the second inclined surface, the second snap-fit connector 231 may be driven to move from the snap-fit position to the unlocking position and compress the first elastic element 232.

In other words, when the first snap-fit connector 121 and the second snap-fit connector 231 are in snap fit, in this case, the second snap-fit connector 231 is located at the snap-fit position. If the accessory body 1 and the accessory base 2 need to be disassembled, the driving element 233 may be driven to move downwards along the second inclined surface so as to drive the second snap-fit connector 231 to move from the snap-fit position to the unlocking position and compress the first elastic element 232. After the second snap-fit connector 231 and the first snap-fit connector 121 release from the snap fit, the accessory body 1 may be disassembled, and after external force for driving the driving element 233 is lost, the restorable acting force of the first elastic element 232 may drive the second snap-fit connector 231 to move from the unlocking position to the snap-fit position, and in this process, the driving element 233 moves upwards along the second inclined surface.

It should be noted that in order to improve the snap-fit effect between the first snap-fit connector 121 and the second snap-fit connector 231, the first elastic element 232 may be arranged to be in a compressed state when the second snap-fit connector 231 is located at the snap-fit position, thereby using elasticity of the first elastic element 232 to enhance acting force between the second snap-fit connector 231 and the first snap-fit connector 121, and improving snap-fit stability.

Further, as shown in FIG. 3 and FIG. 4, the base body 21 is provided with an installation cavity 201. The first elastic element 232 is located inside the installation cavity 201. One end, having the first inclined surface, of the driving element 233 is located inside the installation cavity 201, and the other end is located outside the installation cavity 201. The second inclined surface on the second snap-fit connector 231 is located inside the installation cavity 201.

In other words, when the accessory body 1 and the accessory base 2 need to be disassembled, one end, located outside the installation cavity 201, of the driving element 233 is pressed to enable the driving element 233 to move downwards along the second inclined surface, thereby driving the second snap-fit connector 231 to move within the installation cavity, and move from the snap-fit position to the unlocking position, thereby facilitating the operation.

As shown in FIG. 3 and FIG. 4, in some embodiments, the base body 21 is provided with an accommodation cavity 2121 capable of accommodating the accessory body 1. A portion of the second plug-in connector 22 is located inside the accommodation cavity 2121. When the second snap-fit connector 231 is located at the snap-fit position, a portion of the second snap-fit connector 231 is located inside the accommodation cavity 2121. By arranging the accommodation cavity 2121, the accessory body 1 may be protected, and an overall thickness of the wearable device can be reduced to a certain degree, thereby facilitating minimized design of the wearable device.

Specifically, the guiding cambered surface on the second snap-fit connector 231 is located inside the accommodation cavity 2121 when the second snap-fit connector 231 is located at the snap-fit position.

Exemplarily, in a specific implementation, a depth of the accommodation cavity 2121 may be set to be less than the height of the accessory body 1. Therefore, a top of the accessory body 1 may be exposed from the accessory base 2, thereby tracking the light-emitting portion within the accessory body 1, and facilitating the grip of the accessory body 1 when the accessory body 1 and the accessory base 2 are disassembled. In addition, the exposure of the top of the accessory body 1 from the accessory base 2 also facilitates the cleaning of the accessory body 1. Alternatively, the depth of the accommodation cavity 2121 may also be set equal to the height of the accessory body 1, such that a side portion of the accessory body 1 is fully wrapped, thereby improving a protective effect on the accessory body 1.

As shown in FIG. 3 to FIG. 6, in some embodiments, the base body 21 includes an outer shell 211 and an inner shell 212 which are connected. The inner shell 212 is provided with the above accommodation cavity 2121. The inner shell 212 is provided with a first penetration hole for the second plug-in connector 22 to penetrate through and a second penetration hole for the second snap-fit connector 231 to penetrate through.

In other words, the base body 21 is composed of the outer shell 211 and the inner shell 212, and the inner shell 212 is provided with the above accommodation cavity 2121. In addition, the above installation cavity 201 is formed between the outer shell 211 and the inner shell 212, thereby providing an installation space for the snap-fit structure 23.

Exemplarily, in a specific implementation, the outer shell 211 is of a U-shaped structure, and the inner shell 212 is also of a U-shaped structure. The outer shell 211 and the inner shell 212 are fastened together to form the above base body 21, and the above installation cavity 201 is formed between the inner shell 212 and the outer shell 211.

It should be noted that in this case, when the accessory body 1 and the accessory base 2 are connected through the connectors 25, the connectors 25 are disposed on the outer shell 211, and the inner shell 212 is provided with a hole for the connector 25 located on the accessory body 1 to penetrate through, or the connector 25 on the accessory base 2 extends into the accommodation cavity 2121.

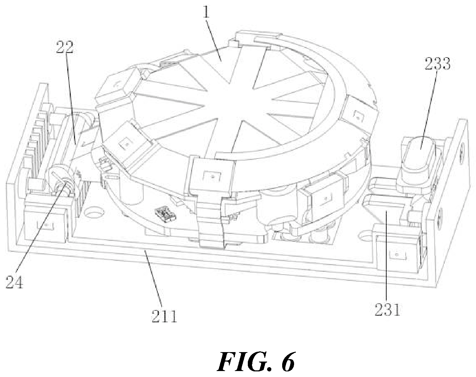

As shown in FIG. 5 and FIG. 6, in some embodiments, the accessory base 2 also includes a second elastic element 24. The second elastic element 24 deforms and provides a lifting force for the second plug-in connector 22 to rotate so as to lift the accessory body 1 in a direction away from the accessory base 2.

In other words, when the first snap-fit connector 121 and the second snap-fit connector 231 release from the snap fit, under the action of the second elastic element 24, the second plug-in connector 22 may lift the accessory body 1 in the direction away from the accessory base 2. Therefore, when the accessory body 1 and the accessory base 2 are disassembled, after the first snap-fit connector 121 and the second snap-fit connector 231 release from the snap fit, the accessory body 1 is lifted by the second plug-in connector 22, thereby facilitating the accessory body 1 and the accessory base 2 to release from the plug-in connection, which means facilitating the removal of the accessory body 1 from the second plug-in connector 22.

Further, the second plug-in connector 22 is rotatably connected to the base body 21 through a rotating shaft.

Exemplarily, in a specific implementation, the second elastic element 24 is selected as a torsion spring, and sleeves the rotating shaft. Two free ends of the torsion spring are connected to or abut against the second plug-in connector 22 and the base body 21 respectively. In an assembly process of the accessory body 1 and the accessory base 2, when the accessory body 1 is pressed to drive the second plug-in connector 22 to rotate, the second elastic element 24 elastically deforms. After the first snap-fit connector 121 and the second snap-fit connector 231 release from the snap fit, the restorable force of the second elastic element 24 drives the second plug-in connector 22 to reversely rotate, thereby lifting the accessory body 1 in the direction away from the accessory base 2.

Exemplarily, in another specific implementation, the second elastic element 24 may also be selected as a column spring. One end of the column spring is connected to the base body 21, and the other end is connected to the second plug-in connector 22. When the second snap-fit connector 231 and the first snap-fit connector 121 are in snap fit, the column spring is stretched. When the second snap-fit connector 231 and the first snap-fit connector 121 release from the snap fit, the restorable acting force of the column spring enables the second snap-fit connector 22 to rotate and lift the accessory body 1.

It should be noted that the above second plug-in connector 22 has a first position and a second position under the action of the second elastic element 24. In the natural state, the second plug-in connector 22 is located at the first position. When the second snap-fit connector 231 and the first snap-fit connector 121 release from the snap fit, the second plug-in connector 22 moves from the second position to the first position under the action of the second elastic element 24, thereby lifting the accessory body 1. When the second plug-in connector 22 is located at the first position and is in plug-in connection with the first plug-in connector 111, the accessory body 1 is pressed in a direction close to the accessory base 2 so as to enable the second plug-in connector 22 to rotate, and achieve the snap fit between the second snap-fit connector 231 and the first snap-fit connector 121. In this case, the second plug-in connector 22 is located at the second position, and the second elastic element 24 deforms to generate an acting force that may drive the second plug-in connector 22 to move from the second position to the first position.

Specifically, referring to FIG. 4, when the second snap-fit connector 231 and the first snap-fit connector 121 are in snap fit, that is, when the second snap-fit connector 231 is located at the snap-fit position, the second plug-in connector 22 is located at the second position. In this case, a first preset included angle is formed between the second plug-in connector 22 and a bottom surface of the accommodation cavity 2121. Referring to FIG. 3, when the second plug-in connector 22 is located at the first position, a second preset included angle is formed between the second plug-in connector 22 and the bottom surface of the accommodation cavity 2121, and is greater than the first preset included angle.

Exemplarily, in a specific implementation, the first preset included angle is 0°, which means that when the second plug-in connector 22 is located at the first position, the second plug-in connector 22 is parallel to the bottom surface of the accommodation cavity 2121. The second preset included angle is greater than 0° and less than 90°, which facilitates the first plug-in connector 111 on the accessory body 1 and the second plug-in connector 22 to be in plug-in connection or released from the plug-in connection when the second plug-in connector 22 is located at the second position.

Further, referring to FIG. 4, the second plug-in connector 22 is provided with a limiting portion 221. The base body 21 is provided with a limiting surface 2111. The limiting surface 2111 is used to limit the limiting portion 221 when the second plug-in connector 22 lifts the accessory body 1.

In other words, when the second plug-in connector 22 lifts the accessory body 1 under the action of the second elastic element 24, the limiting portion 221 and the limiting surface 2111 cooperate to limit the position of the second plug-in connector 22. Specifically, when the second plug-in connector 22 is located at the first position, the limiting portion 221 abuts against the limiting surface 2111. That is, the cooperation between the limiting surface 2111 and the limiting portion 221 causes the second plug-in connector 22 to rotate to the first position and then stop rotating under the action of the second elastic element 24.

It should be noted that the above limiting surface 2111 is disposed on the outer shell 211, and located on an inner side of the outer shell 211.

In some embodiments, at least one of the accessory body 1 and the accessory base 2 is provided with a power supply component capable of supplying power to the light-emitting portion.

In a specific implementation, the accessory body 1 may be provided with the light-emitting portion, and the accessory base 2 is provided with the power supply component. When the first snap-fit connector 121 and the second snap-fit connector 231 are in snap fit, the power supply component and the light-emitting portion are conducted, and the power supply component supplies power to the light-emitting portion. Alternatively, the accessory body 1 may also be provided with the power supply component, and the accessory base 2 is provided with the light-emitting portion. When the first snap-fit connector 121 and the second snap-fit connector 231 are in snap fit, the power supply component and a light-emitting element are conducted, and the power supply component supplies power to the light-emitting element. Alternatively, both the accessory body 1 and the accessory base 2 are provided with the light-emitting portions, and the accessory body 1 and/or the accessory base 2 are/is provided with the power supply component.

In summary, a specific disassembly and assembly process of the accessory is described in detail.

When the accessory body 1 and the accessory base 2 are not installed, that is, when the accessory body 1 and the accessory base 2 are respectively in the natural state, the second plug-in connector 22 is located at the first position, the second snap-fit connector 231 is located at the snap-fit position, and the limiting portion 221 on the second plug-in connector 22 abuts against the limiting surface 2111.
1. When the accessory body 1 is installed, the second plug-in connector 22 and the first plug-in connector 111 are firstly in plug-in connection, and in this case, the second plug-in connector 22 is located at the first position, and supports the accessory body 1, as shown in FIG. 3. Then, the accessory body 1 is pressed in the direction close to the accessory base 2, such that the second plug-in connector 22 rotates until the accessory body 1 makes contact with the guiding cambered surface of the second snap-fit connector 231. The accessory body 1 is continuously pressed, such that the accessory body 1 passes over the guiding cambered surface, the second snap-fit connector 231 is in snap fit with the first snap-fit connector 121, and in this case, the second plug-in connector 22 is located at the second position, the second snap-fit connector 231 is located at the snap-fit position, and installation of the accessory body 1 is achieved, as shown in FIG. 4.
   It should be noted that in the sliding process of the accessory body 1 along the guiding cambered surface, the second snap-fit connector 231 moves towards an outer side of the accommodation cavity 2121 and compresses the first elastic element 232, and after the accessory body 1 passes over the guiding cambered surface, the first elastic element 232 pushes the second snap-fit connector 231 to move towards an inner side of the accommodation cavity 2121, such that the second snap-fit connector 231 abuts against the first snap-fit connector 121. In the process of pressing the accessory body 1 to enable the second plug-in connector 22 to rotate, the second elastic element 24 deforms, and generates the acting force that drives the second plug-in connector 22 to move from the second position to the first position.
2. When the accessory body 1 is disassembled, the driving element 233 is pressed to move downwards along the second inclined surface, thereby driving the second snap-fit connector 231 to move from the snap-fit position to the unlocking position. When the second snap-fit connector 231 and the first snap-fit connector 121 release from the snap fit, the second plug-in connector 22 rotates from the second position to the first position under the action of the second elastic element 24, thereby lifting the accessory body 1 in the direction away from the accessory base 2. After the second plug-in connector 22 rotates to the first position, the accessory body 1 is removed from the second plug-in connector 22, thereby achieving disassembly of the accessory body 1.

It should be noted that in the process that the driving element 233 drives the second snap-fit connector 231 to move from the snap-fit position to the unlocking position, the second snap-fit connector 231 compresses the first elastic element 232. When the driving element 233 loses external force, the second snap-fit connector 231 returns to the snap-fit position under the action of the first elastic element 232. In this process, the driving element 233 moves upwards along the second inclined surface. When the second plug-in connector 22 rotates to the first position, the limiting portion 221 on the second plug-in connector 22 abuts against the limiting surface 2111.

In summary, according to the accessory provided by this embodiment of the present disclosure, the accessory body 1 and the accessory base 2 may be in plug-in connection through the first plug-in connector 111 and the second plug-in connector 22. The first snap-fit connector 121 and the second snap-fit connector 231 are in snap fit or released from the snap fit, and the drive component and the second elastic element 24 are arranged, thereby facilitating assembly and disassembly of the accessory body 1 and the accessory base 2, and enabling the accessory body 1 to be separately used or to act in combination with the accessory base 2.

The above accessory is preferably a body tracker. The accessory body 1 is internally provided with an inertial measurement unit (IMU) sensor. The accessory body 1 may be used as a standalone gaming peripheral applied to devices such as a baseball bat and a table tennis racket, or may be used integrally with the accessory base 2 to be strapped onto a position, such as the leg, the waist, and the arm of the user.

It should be noted that herein, relational terms such as "first" and "second" are used only to distinguish one entity or operation from another and do not necessarily require or imply any actual relationship or order between these entities or operations. In addition, terms "comprise", "include", or any other variations thereof are intended to cover non-exclusive inclusion, and therefore a process, a method, an article, or a device including a series of elements not only includes those elements but also includes other elements not clearly listed, or further includes elements inherent to the process, the method, the article, or the device. In the absence of further limitations, an element specified by the phrase "including a..." does not exclude the existence of other identical elements in the process, the method, the article, or the device that includes the element.

The above contents are merely specific implementations of the present disclosure, such that those skilled in the art can understand or implement the present disclosure. More modifications for these embodiments are apparent to those skilled in the art, and general principles defined herein may be implemented in other embodiments without departing from the spirit or scope of the present disclosure. Therefore, the present disclosure will not be limited by these embodiments described herein but is required to conform to a widest scope consistent with the principles and novel characteristics disclosed herein.

## Claims

1. An accessory body (1), wherein the accessory body (1) is provided with a first plug-in connector (111) and a first snap-fit connector (121), the accessory body (1) is used for being connected with an accessory base (2), the accessory base (2) comprises a base body (21), a second plug-in connector (22), and a snap-fit structure (23), the second plug-in connector (22) is rotatably disposed on the base body (21) and is capable of being in plug-in connection with the first plug-in connector (111), and the snap-fit structure (23) and the first snap-fit connector (121) are capable of being in snap fit or released from the snap fit; and
in a case that the first plug-in connector (111) and the second plug-in connector (22) are in plug-in connection, after the accessory body (1) is pressed, the second plug-in connector (22) is driven to rotate so as to snap fit the first snap-fit connector (121) and the snap-fit structure (23).

2. The accessory body according to claim 1, wherein heights of the first plug-in connector (111) and the first snap-fit connector (121) are both less than half of a height of the accessory body (1) in a height direction of the accessory body (1).

3. The accessory body according to claim 1, wherein the accessory body (1) is provided with a light-emitting portion.

4. An accessory, comprising the accessory base (2) and the accessory body (1) according to any of claims 1 to 2.

5. The accessory according to claim 4, wherein a light-emitting portion is disposed on the accessory body (1) and/or the accessory base (2).

6. The accessory according to claim 5, wherein both the first plug-in connector (111) and the second plug-in connector (22) are electrical connectors, and the electrical connectors are configured to achieve signal transmission and/or electrical transmission between the accessory body (1) and the accessory base (2); or
both the accessory base (2) and the accessory body (1) are provided with connectors (25), and in a case that the first snap-fit connector (121) and the snap-fit structure (23) are in snap fit, the two connectors (25) are connected to achieve signal transmission and/or electrical transmission between the accessory base (2) and the accessory body (1).

7. The accessory according to claim 6, wherein both the first plug-in connector (111) and the second plug-in connector (22) are electrical connectors, and the light-emitting portion achieves electrical transmission through the electrical connectors; or
both the accessory base (2) and the accessory body (1) are provided with connectors (25), and the light-emitting portion achieves electrical transmission through the connectors (25).

8. The accessory according to claim 4, wherein the snap-fit structure (23) comprises a second snap-fit connector (231) and a drive component, the second snap-fit connector (231) is slidably disposed on the base body (21), the second snap-fit connector (231) has a snap-fit position capable of snap fit with the first snap-fit connector (121) and an unlocking position capable of releasing the snap fit from the first snap-fit connector (121), and the drive component is capable of driving the first snap-fit connector (121) to be switched between the snap-fit position and the unlocking position.

9. The accessory according to claim 8, wherein the drive component comprises a first elastic element (232), one end of the first elastic element (232) is connected to the base body (21), the other end is connected to the second snap-fit connector (231), and in a natural state, the second snap-fit connector (231) is located at the snap-fit position.

10. The accessory according to claim 9, wherein a guiding cambered surface is disposed on the first snap-fit connector (121) and/or the second snap-fit connector (231); and
in a case that the accessory body (1) is pressed, the accessory body is capable of passing over the second snap-fit connector (231) through the guiding cambered surface and being in snap fit with the second snap-fit connector (231).

11. The accessory according to claim 9, wherein the drive component further comprises a driving element (233), the driving element (233) has a first inclined surface, and the second snap-fit connector (231) has a second inclined surface attached to the first inclined surface; and
in a case that the driving element (233) moves downward along the second inclined surface, the second snap-fit connector (231) is capable of being driven to move from the snap-fit position to the unlocking position and compressing the first elastic element (232).

12. The accessory according to claim 11, wherein the base body (21) is provided with an installation cavity (201), the first elastic element (232) is located inside the installation cavity (201), one end, having the first inclined surface, of the driving element (233) is located inside the installation cavity (201), the other end is located outside the installation cavity (201), and the second inclined surface on the second snap-fit connector (231) is located inside the installation cavity (201).

13. The accessory according to claim 8, wherein the base body (21) is provided with an accommodation cavity (2121) capable of accommodating the accessory body (1), a portion of the second plug-in connector (22) is located inside the accommodation cavity (2121), and in a case that the second snap-fit connector (231) is located at the snap-fit position, a portion of the second snap-fit connector (231) is located inside the accommodation cavity (2121).

14. The accessory according to claim 13, wherein a depth of the accommodation cavity (2121) is less than or equal to a height of the accessory body (1);
and/or, the base body (21) comprises an outer shell (211) and an inner shell (212) connected to each other, the inner shell (212) is provided with the accommodation cavity (2121), the inner shell (212) is provided with a first penetration hole for the second plug-in connector (22) to penetrate through and a second penetration hole for the second snap-fit connector (231) to penetrate through.

15. The accessory according to claim 8, wherein the accessory base (2) further comprises a second elastic element (24), the second elastic element (24) deforms and provides a lifting force for the second plug-in connector (22) to rotate to lift the accessory body (1) in a direction away from the accessory base (2).

16. The accessory according to claim 15, wherein the second plug-in connector (22) is provided with a limiting portion (221), the base body (21) is provided with a limiting surface (2111), and the limiting surface (2111) is configured to limit the limiting portion (221) in a case that the second plug-in connector (22) lifts the accessory body (1).

17. The accessory according to claim 4, wherein the accessory is a wearable device.
